# EUROPÄISCHE PATENTSCHRIFT

(11) **EP 3 971 676 B1**
(45) Veröffentlichungstag und Bekanntmachung des Hinweises auf die Patenterteilung: **04.12.2024**
(21) Anmeldenummer: 21180909.0
(22) Anmeldetag: 22.06.2021
(51) Int. Cl.: G05D 23/19, G05D 22/02

(54) **GEBÄUDESCHUTZSYSTEM UND VERFAHREN**
BUILDING SECURITY SYSTEM AND METHOD
SYSTÈME ET PROCÉDÉ DE PROTECTION DU BÂTIMENT

(30) Priorität: 24.06.2020 DE 102020116651
(43) Veröffentlichungstag der Anmeldung: 23.03.2022
(73) Patentinhaber: ACO Ahlmann SE & Co. KG, 24782 Büdelsdorf (DE)
(72) Erfinder: Luttmer, Jörg, 24306 Oberkleveez (DE); Trippel, Stefan, 24363 Holtsee (DE)
(74) Vertreter: Meissner Bolte Partnerschaft mbB

(56) Entgegenhaltungen:
- EP-A2- 0 428 240
- WO-A1-2011/136713
- US-A1- 2015 032 264

## Beschreibung

Die Erfindung betrifft ein Gebäudeschutzsystem, insbesondere ein Kellerschutzsystem. Ferner betrifft die Erfindung ein Verfahren zum Betrieb eines Gebäudeschutzsystems.

Gebäude, insbesondere Keller als tiefstem angeordnetem Teil eines Gebäudes, sind diversen Gefahren ausgesetzt. Nässe und Feuchtigkeit stellen besondere Bedrohungen für das Gebäude dar. Feuchtigkeit, die sich bei falscher oder unzureichender Lüftung durch Kondensation auf Oberflächen niederschlägt, kann die Bildung von Schimmel begünstigen, der schädlich für die Bausubstanz und die Gesundheit ist. Feuchte und Nässe können ebenfalls durch Undichtigkeiten in den Wänden oder in der Bodenplatte in das Gebäude gelangen. Es ist auch möglich, dass es bei Starkregen oder Hochwasser durch Fenster zu Wassereinbrüchen kommt. Insbesondere bei Kellerfenstern mit Lichtschacht kann Wasser in das Gebäude eindringen, wenn im Lichtschacht stehendes Wasser auf das Kellerfenster drückt. Bei Starkregen oder Hochwasser ist es ferner möglich, dass sich ein Rückstau in der Kanalisation bildet, wodurch Wasser durch Abflüsse in das Gebäude eindringen kann. Auch durch Überschwemmungen, Schlamm- oder Gerölleinbruch kann das Gebäude nachhaltig beschädigt werden. Ein Wasserrohrbruch ist ebenfalls eine häufige Ursache für Wasserschäden in Gebäuden.

Als Schutzmaßnahmen kommen Wannen zum Einsatz, die das Gebäude gegen Nässe und Feuchtigkeit abdichten. Eine weitere Maßnahme gegen einen Wassereinbruch sind druckwasserdichte Lichtschächte und wassereinbruchssichere Fenster. Um Schimmelbildung vorzubeugen, ist es notwendig, regelmäßig und richtig zu lüften. Rückstauverschlüsse und Hebeanlagen können bei überfluteten Abwassersystemen ein Eindringen von Wasser in das Gebäude verhindern.

Um das Gebäude zusätzlich oder alternativ zu schützen, können Sensoren eingesetzt werden. Im Gebäude können Temperatur- und Feuchtigkeitssensoren angeordnet sein, die im Falle einer bestimmten Temperatur oder Luftfeuchtigkeit ein Signal ausgeben und ein Lüften veranlassen. Im Außenbereich des Gebäudes können ein Regensensor, ein Überschwemmungssensor oder andere Sensoren angeordnet sein, die vor weiteren Gefahren bzw. Ereignissen warnen.

Aus der WO 2011/136713 A1 geht beispielsweise ein System zur Belüftung eines Raums hervor, das Sensoren zur Messung von Temperatur und relativer Luftfeuchtigkeit umfasst.

Die EP 0 428 240 A2 und die US 2015/0032264 A1 beschreiben weitere Beispiele für Vorrichtungen oder Systeme, die dem Schutz von Räumen vor diversen Gefahren, wie Feuchtigkeit, dienen.

Die aus dem Stand der Technik bekannten Schutzmaßnahmen reichen nicht aus, um die hohen Anforderungen an den Gebäudeschutz zu erfüllen.

Die Erfindung hat die Aufgabe, ein Gebäudeschutzsystem anzugeben, bei dem die Schutzmaßnahmen verbessert sind. Ferner ist es Aufgabe der Erfindung ein Verfahren zum Betrieb eines Gebäudeschutzsystems anzugeben.

Erfindungsgemäß wird die Aufgabe mit Blick auf
- das Gebäudeschutzsystem durch den Gegenstand des Anspruchs 1 und
- das Verfahren durch den Gegenstand des Anspruchs 9
gelöst.

Konkret wird die Aufgabe durch ein Gebäudeschutzsystem, insbesondere Kellerschutzsystem, zum Schutz vor Gebäudeschäden, insbesondere Nässe und/oder Feuchtigkeit und/oder Schlamm und/oder Überschwemmung gelöst, das wenigstens eine Regeleinheit zur Regelung der Luftfeuchtigkeit und/oder der Temperatur aufweist, wobei
die Regeleinheit derart konfiguriert ist, dass die Regelung der Luftfeuchtigkeit und/oder der Temperatur durch Ereignisse geändert und/oder angepasst wird, die zusätzliches Eintragen von Nässe und/oder von Feuchtigkeit in das Gebäude, insbesondere in einen Kellerraum, verursachen, wobei die Änderung der Regelung durch die Ereignisse gegenüber der Regelung der Luftfeuchtigkeit und/oder der Temperatur priorisiert ist.

Die Regeleinheit ist dazu konfiguriert, abhängig von einem priorisierten Ereignis Schutzmaßnahmen zu ergreifen, wobei die Regeleinheit von einem Normalbetrieb abweicht. Die Regeleinheit ist mit wenigstens einem Stellglied zum Regeln der Luftfeuchtigkeit und/oder der Temperatur signalverbunden, wobei das Stellglied einen Lüfter zum aktiven Lüften und/oder ein Fenster zum passiven Lüften und/ oder ein Entfeuchtungsgerät aufweist. Das Stellglied weist ferner ein Heizthermostat auf, wobei das Heizthermostat ausgelegt ist, die Innentemperatur im Gebäude zu regulieren, insbesondere zu erhöhen, um der Kondensation von Feuchtigkeit vorzubeugen, wenn ein Lüften oder Entfeuchten der Raumluft auf Grund des priorisierten Ereignisses nicht möglich ist.

Die Regeleinheit ist dazu konfiguriert, dass nach dem priorisierten Ereignis eine manuelle Freigabe erforderlich ist, um wieder in den Normalbetrieb zurück zu kehren. Ferner ist die Regeleinheit dazu konfiguriert, eine Laufzeit und/oder eine Betätigungsanzahl und/oder einen Füllstand wenigstens eines Stellglieds zu überwachen und bei Erreichen und/oder Überschreiten eines vordefinierten Grenzwerts der Laufzeit und/oder der Betätigungsanzahl und/oder des Füllstands ein Signal und/oder eine Meldung auszugeben.

Die Regeleinheit dient dazu, die Luftfeuchtigkeit und/oder die Temperatur zu regeln. Es sind verschiedene Methoden möglich, durch die die Regelung erfolgt. Beispielsweise kann die Temperatur und/oder die Luftfeuchtigkeit durch Messen bzw. Berechnung des Taupunkts, der relativen Luftfeuchtigkeit und/oder der absoluten Luftfeuchtigkeit geregelt werden.

Vorzugsweise wird durch passives und/oder aktives Lüften die Luftfeuchtigkeit und/oder die Temperatur geregelt.

Der Zeitpunkt, wann ein Lüften sinnvoll ist, ist vorzugsweise von der Differenz der Taupunkttemperatur im Gebäude und im Freien abhängig. Sobald die Taupunkttemperatur im Gebäude höher ist, als die Taupunkttemperatur im Freien, ist ein Lüften sinnvoll. Der Lüftungsvorgang kann somit beendet werden, sobald die Taupunkttemperatur im Inneren des Gebäudes niedriger ist, als die Taupunkttemperatur im Freien.

Unter der Taupunkttemperatur ist die Temperatur zu verstehen, die unterschritten werden muss, damit die Feuchtigkeit aus der Luft kondensiert und sich als Tau oder Nebel von der Luft abscheidet. Mit anderen Worten ist der Taupunkt der Punkt, an dem die relative Luftfeuchtigkeit 100% beträgt. Die Taupunkttemperatur lässt sich mittels einer gemessenen Temperatur und der relativen Luftfeuchtigkeit berechnen.

Die relative Luftfeuchtigkeit gibt an, wieviel Prozent des maximalen Wasserdampfgehalts sich in der Luft befindet. Die Aufnahmefähigkeit der Luft ist von der Temperatur und dem Druck abhängig. Die Aufnahmefähigkeit wächst mit steigender Temperatur der Luft. Bei einer relativen Luftfeuchtigkeit von 100% ist die Luft gesättigt. Überschüssiges Wasser kondensiert in Form von feinen Nebeltropfen.

Die absolute Luftfeuchtigkeit gibt den Feuchtigkeitsgehalt in Gramm pro Kubikmeter an. Die absolute Luftfeuchtigkeit lässt sich aus der Temperatur und der relativen Luftfeuchtigkeit oder der Temperatur und dem Taupunkt berechnen.

Die Regeleinheit regelt durch verschiedene Maßnahmen die Luftfeuchtigkeit und/oder die Temperatur. Bei einem Ereignis wird diese Regelung geändert und/oder angepasst. Ob ein Ereignis vorliegt, wird vorzugsweise durch Sensoren und/oder durch externe Daten ermittelt.

Unter einem Ereignis ist ein Vorfall oder ein Zustand zu verstehen, der zu einem zusätzlichen Eintragen von Feuchtigkeit und/oder Nässe führen kann. Beispielsweise können bei einem Ereignis Schlamm, Geröll und/oder Hochwasser in das Gebäude eindringen. Die Schutzmaßnahmen, die von der Regeleinheit zur Regelung der Temperatur und/oder der Feuchtigkeit ergriffen werden, sind davon abhängig, welches Ereignis vorliegt.

Darunter ist zu verstehen, dass die Regeleinheit von einem Normalbetrieb abweicht. Bei einem Ereignis kann beispielsweise auf ein Lüften oder andere Maßnahmen zum Regeln der Temperatur und/oder Luftfeuchtigkeit verzichtet werden, wenn die Gefahr besteht, dass im Normalbetrieb weitere Nässe und/oder Feuchtigkeit in das Gebäude eindringt. Ein solches Ereignis kann beispielsweise Starkregen, Sturm und/oder Hochwasser sein.

Der Vorteil bei dem Gebäudeschutzsystem ist, dass durch die priorisierten Ereignisse der mögliche Schaden im Gebäudeinnern minimiert wird. Die einzelnen Schutzmaßnahmen werden nicht mehr isoliert betrachtet, sondern sind durch die Ereignisse miteinander gekoppelt. Insbesondere wird so vermieden, dass Schäden durch nicht sinnvolle Maßnahmen zur Regelung der Luftfeuchtigkeit und/oder Temperatur entstehen. Beispielsweise ist es nicht sinnvoll bei Starkregen oder Hochwasser ein Fenster zum Lüften zu öffnen.

Besondere Ausführungsformen sind in den Unteransprüchen angegeben.

In einer besonders bevorzugten Ausführungsform ist die Regeleinheit mit Sensoren für die Erfassung der Innen- und Außentemperatur und/oder Sensoren für die Erfassung der Innen- und Außenluftfeuchtigkeit signalverbunden. Das ermöglicht die Messung der Innen- und Außentemperatur und/oder der Innen- und Außenluftfeuchtigkeit. Unter der Luftfeuchtigkeit ist hier die relative und/oder die absolute Luftfeuchtigkeit zu verstehen, wobei sich die absolute Luftfeuchtigkeit aus einer gemessenen Temperatur und der gemessenen relativen Luftfeucht berechnen lässt. Durch die Sensoren Innen und Außen lassen sich die Werte gegeneinander abgleichen und Ereignisse feststellen. Die Temperatur und Luftfeuchtigkeitssensoren sind vorzugsweise als eine Einheit bzw. eine Komponente zusammengefasst. Mit anderen Worten bilden ein Luftfeuchtigkeitssensor und ein Temperatursensor zusammen ein Bauteil.

Erfindungsgemäß ist die Regeleinheit mit wenigstens einem Stellglied zum Regeln der Luftfeuchtigkeit und/oder der Temperatur signalverbunden ist, wobei das Stellglied einen Lüfter zum aktiven Lüften und/oder ein Fenster zum passiven Lüften und/oder ein Entfeuchtungsgerät und/oder ein Heizthermostat aufweist. Weitere Stellglieder sind möglich. Welches Stellglied eingesetzt wird, um die Luftfeuchtigkeit und/oder die Temperatur zu regeln ist von dem vorliegenden Ereignis abhängig. Die unterschiedlichen Stellglieder sind vorteilhaft, da so verschiedene Ereignisse angemessene Maßnahmen getroffen werden können, um das Gebäudeinnere zu schützen.

Bei einem zu priorisierenden Ereignis kehrt das Stellglied erst durch eine manuelle Freigabe wieder in einen Normalbetrieb zurück. Mit anderen Worten muss ein Nutzer das Ereignis quittieren. Dadurch kann sichergestellt werden, dass das Ereignis vorüber ist. Ferner können so Wartungsmaßnahmen, die evtl. durch das Ereignis notwendig geworden sind, durchgeführt werden, bevor die Regelung wieder fortgesetzt wird.

Es ist erfindungsgemäß vorgesehen, dass die Regeleinheit dazu konfiguriert ist, eine Laufzeit und/oder eine Betätigungsanzahl und/oder einen Füllstand wenigstens eines Stellglieds zu überwachen und bei Erreichen und/oder Überschreiten eines vordefinierten Grenzwerts der Laufzeit und/oder der Betätigungsanzahl und/oder des Füllstands ein Signal und/oder eine Meldung auszugeben.

Besonders bevorzugt ist die Regeleinheit dazu konfiguriert, Ereignisse zu priorisieren, die Wetterdaten und/oder lokale hydrologische Parameter, umfassen, wobei die Daten und/oder die Parameter lokal oder extern abrufbar sind. Das ermöglicht es, dass beispielsweise Wetterdaten und hydrologische Parameter bei der Regelung der Luftfeuchtigkeit und/oder der Temperatur mit einzubeziehen. Unter Wetterdaten ist beispielsweise eine Sturmwarnung zu verstehen. Bei dem Unter einem hydrologischen Parameter ist beispielsweise der Porenwasserdruck. Auch die Nähe zu Gewässern oder Wasserläufen kann berücksichtigt werden.

Weiter besonders bevorzugt ist die Regeleinheit dazu konfiguriert, bei potentiell schädlichen Wetterdaten und/oder hydrologischen Parametern, beispielsweise bei Sturm und/oder Hochwasser, die Regelung der Luftfeuchtigkeit und/oder der Temperatur zu ändern und/oder anzupassen, insbesondere den Lüfter auszuschalten und/oder das Fenster zu schließen und/oder geschlossen zu halten und/oder das Entfeuchtungsgerät und/oder den Heizungsthermostat einzuschalten. Ereignis Sturmwarnung kann beispielsweise ein passives Lüften des Gebäudes, bei dem die Fenster geöffnet sind, eingestellt werden. Um der Kondensation von Feuchtigkeit vorzubeugen ist es vorteilhaft, die Temperatur im Gebäude durch das Einschalten des Heizthermostats zu erhöhen.

In einer bevorzugten Ausführungsform weist das Fenster einen Lichtschacht mit einem Lichtschachtsensor zur Erfassung eines Wasserstands, insbesondere einer Überflutung, im Lichtschacht auf. Dadurch kann die Gefahr eines möglichen Wassereinbruchs durch das Fenster frühzeitig erkannt werden.

Es ist weiter bevorzugt, wenn die Regeleinheit dazu konfiguriert ist, ein Ereignis zu priorisieren, das einen Wasserstand im Lichtschacht, insbesondere eine Überflutung des Lichtschachts, aufweist. Dadurch ist die Erfassung eines zusätzlichen Ereignisses möglich.

In einer weiteren bevorzugten Ausführungsform ist die Regeleinheit dazu konfiguriert, bei einem Wasserstand, insbesondere einer Überflutung, im Lichtschacht die Regelung der Luftfeuchtigkeit und/oder der Temperatur zu ändern und/oder anzupassen, insbesondere den Lüfter auszuschalten und/oder das Fenster zu schlie-ßen und/oder geschlossen zu halten und/oder das Entfeuchtungsgerät und/oder den Heizungsthermostat einzuschalten. So kann vermieden werden, dass bei beispielsweise bei einer Überflutung des Lichtschachts, das Fenster zum passiven Lüften geöffnet wird.

In einer vorteilhaften Ausführungsform ist im Gebäude ein Sensor zur Erfassung eines Wasserstands, insbesondere einer Überschwemmung, angeordnet. Der Sensor ermöglicht so, dass eine Überschwemmung im Gebäudeinnern, beispielsweise durch einen Rohrbruch, erkannt werden kann.

Vorteilhafterweise ist die Regeleinheit dazu konfiguriert, ein Ereignis zu priorisieren, das den Wasserstand im Gebäude, insbesondere eine Überschwemmung, umfasst. Besonders vorteilhaft werden bei einem Wasserstand im Gebäude, insbesondere bei einer Überschwemmung, eine Pumpe aktiviert wird und/oder elektronische Geräte abgeschaltet. Dadurch können weitere Sachschäden im Gebäude vermieden werden.

In einer weiteren vorteilhaften Ausführungsform umfasst die Regeleinheit mittels einer App verbindbar und einstellbar ist, und wenigstens einen Lüften- und einen Urlaubsmodus. Beim Modus Lüften sind alle Maßnahmen zur Regelung der Luftfeuchtigkeit und/oder der Temperatur freigeschaltet bzw. aktiv. Im Urlaubsmodus sind nur die Maßnahmen freigeschaltet, bei denen das Gebäude einbruchssicher ist. Durch die Verbindung mit einer App ist es möglich, dass der Nutzer Nachrichten über Ereignisse erhält und aus der Entfernung reagieren kann.

Es ist eine Ausführungsform möglich, bei der die Regeleinheit mit einem Mobilfunkgerät verbunden und dazu konfiguriert ist, in Abhängigkeit vom Abstand des Mobilfunkgeräts zur Regeleinheit den Modus zu wechseln. Das ermöglicht ein automatisches Umschalten zwischen dem Modus Lüften (Home) und dem Modus Urlaub oder einem anderen Modus.

Ein nebengeordneter Aspekt der Erfindung betrifft ein Verfahren zum Betrieb eines Gebäudeschutzsystems, insbesondere eines Kellerschutzsystems, bei dem
a. die Ereignisse, bei denen die Regelung der Luftfeuchtigkeit und/oder der Temperatur geändert und/oder angepasst wird, festgelegt werden,
b. die Regeleinheit im Betrieb kontinuierlich überprüft, ob eines der festgelegten Ereignisse vorliegt,
c. beim Vorliegen eines Ereignisses die Regelung der Luftfeuchtigkeit und/oder der Temperatur in Abhängigkeit des vorliegenden Ereignisses geändert und/oder angepasst wird, und
d. die Regeleinheit abhängig von einem zu priorisierenden Ereignis Schutzmaßnahmen zur Regelung der Luftfeuchtigkeit und/oder der Temperatur ergreift, wobei die Regeleinheit von einem Normalbetrieb abweicht.

Die Regeleinheit ist mit wenigstens einem Stellglied zum Regeln der Luftfeuchtigkeit und/oder der Temperatur signalverbunden, wobei das Stellglied ein Heizthermostat aufweist, wobei die Innentemperatur im Gebäude durch das Heizthermostat reguliert, insbesondere erhöht, wird, um der Kondensation von Feuchtigkeit vorzubeugen, wenn ein Lüften oder Entfeuchten der Raumluft auf Grund des priorisierten Ereignisses nicht möglich ist, wobei die Regeleinheit nach dem priorisierten Ereignis durch eine manuelle Freigabe wieder in den Normalbetrieb zurücckehrt.

Die Ereignisse sind mit der Regelung verbunden. Die Regelung ist von den Ereignissen abhängig. Je nach Ereignis entscheidet die Regeleinheit, ob und auf welche Art und Weise die Regelung geändert und/oder angepasst werden muss.

Besonders bevorzugt prüft die Regeleinheit ein Ereignis, bei dem Wetterdaten und/oder lokale hydrologische Parameter, abgefragt werden, die lokal ermittelt oder extern bezogen werden.

Weiter besonders bevorzugt prüft die Regeleinheit ein Ereignis, bei dem der Status des Wasserstands im Lichtschacht erfasst wird. Dadurch kann ein Öffnen des Fensters vermieden werden, wenn dadurch Wasser ins Gebäude gelangen würde.

Es ist bevorzugt, wenn die Regeleinheit ein Ereignis prüft, bei dem der Wasserstand im Gebäude erfasst wird. Dadurch kann beispielsweise ein Rohrbruch erkannt werden und eine Pumpe aktiviert und/oder das Wasser abgedreht werden.

Die Erfindung wird im Folgenden anhand eines Ausführungsbeispiels unter Bezugnahme auf die beigefügten Zeichnungen näher erläutert.

Darin zeigen:
- Fig. 1: eine schematische Ansicht eines erfindungsgemäßen Ausführungsbeispiels eines Gebäudeschutzsystems;
- Fig. 2: ein Flussdiagramm eines Lichtschachtsensors eines erfindungsgemäßen Ausführungsbeispiels;
- Fig. 3: ein Flussdiagramm eines Außensensors eines erfindungsgemäßen Ausführungsbeispiels;
- Fig. 4: ein Flussdiagramm eines Innensensors eines erfindungsgemäßen Ausführungsbeispiels;
- Fig. 5: ein Flussdiagramm zur Eingabe von Ausschlusszeiten, eines erfindungsgemäßen Ausführungsbeispiels;
- Fig. 6: ein Flussdiagramm eines erfindungsgemäßen Ausführungsbeispiels eines Gebäudeschutzsystems und
- Fig. 7: ein Flussdiagramm eines erfindungsgemäßen Ausführungsbeispiels mit Bezug auf eine Steckdose.

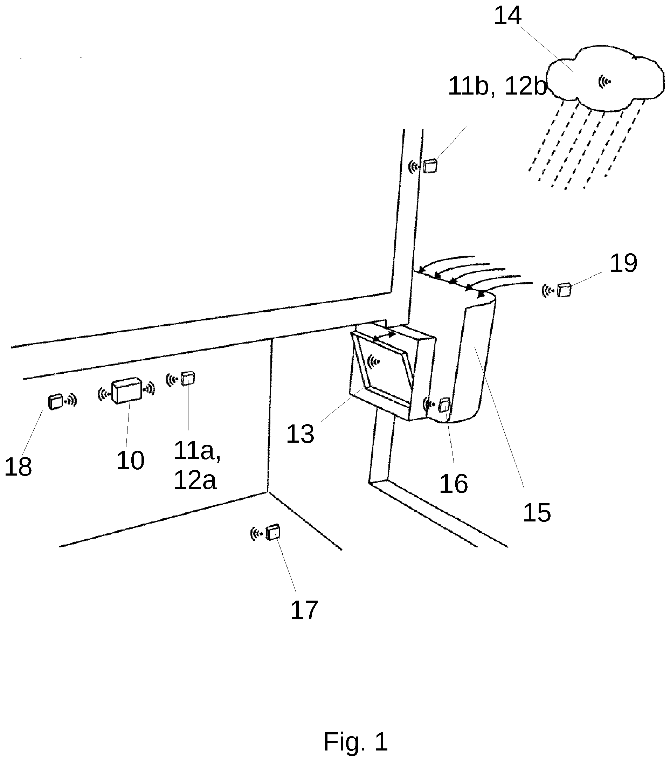

Fig. 1 zeigt den Aufbau eines Ausführungsbeispiels eines Gebäudeschutzsystems. Das Gebäudeschutzsystem umfasst eine Regeleinheit 10. Die Regeleinheit 10 ist in einem Kellerraum eines Gebäudes angeordnet. Es ist möglich, dass die Regeleinheit 10 in einem anderen Raum des Gebäudes angeordnet ist.

Der Kellerraum weist mindestens ein Kellerfenster 13 auf. An dem Kellerfenster 13 ist ein Lichtschacht 15 angeordnet. Das Kellerfenster 13 weist ein Stellglied 13 auf. Das Stellglied 13 ist als Aktor ausgebildet bzw. umfasst einen Aktor. Als Kellerfenster und Aktor sind beispielsweise Produkte (Smart Window mit Slimchain Antrieb) möglich, die von der Anmelderin entwickelt wurden.

Die Regeleinheit 10 ist mit verschiedenen Sensoren signalverbunden. Die Regeleinheit 10 weist einen Innenluftfeuchtigkeitssensor 11a und einen Innentemperatursensor 12a für den Innenbereich des Gebäudes sowie einen Außenluftfeuchtigkeitssensor 11b und einen Außentemperatursensor 12b für den Außenbereich des Gebäudes auf. Im Lichtschacht 15 ist ein Lichtschachtsensor 16 angeordnet. Das Gebäudeschutzsystem weist ferner einen Überschwemmungssensor 17, einen Schimmelsensor 18 im Gebäudeinnern und einen Hochwassersensor 19 im Freien auf. Weitere Sensoren, mit denen die Regeleinheit 10 signalverbunden werden kann, sind möglich.

Die Regeleinheit 10 in Fig. 1 ist dazu konfiguriert, Wetterdaten 14 zu empfangen. Dazu kann die Regeleinheit 10 vorzugsweise mit einer Wetterstation und/oder einer Datenbank, vorzugsweise mit dem Internet, signalverbunden sein.

Die Luftfeuchtigkeitssensoren 11a, 11b messen bevorzugt die relative Luftfeuchtigkeit. Durch die Anordnung der Sensoren im Inneren und im Äußeren, ist die Innenluftfeuchtigkeit mit der Außenluftfeuchtigkeit abgleichbar. Ebenso ist der gemessene Wert der Innentemperatur mit dem gemessenen Wert der Außentemperatur abgleichbar. Durch Abgleichen der Innenluftfeuchtigkeit mit der Außenluftfeuchtigkeit ist ermittelbar, auf welche Art und Weise die Luftfeuchtigkeit geregelt werden soll.

Die gemessenen Werte der Temperatur und der relativen Luftfeuchtigkeit können dazu verwendet werden, die absolute Luftfeuchtigkeit und/oder den Taupunkt zu berechnen.

Die Stellglieder 13 dienen dazu, die Innenluftfeuchtigkeit und/oder die Innentemperatur einzustellen. Durch den Aktor am Kellerfenster 13 kann das Kellerfenster 13 automatisch in einen geschlossenen und/oder einen offenen Zustand überführt werden. Das Kellerfenster 13 ermöglicht ein passives Lüften des Kellerraums.

Die Wetterdaten ermöglichen der Regeleinheit 10, ein Ereignis wie beispielsweisen einen Sturm oder Starkregen zu erkennen und zu priorisieren. Beispielsweise soll bei Sturm oder Starkregen auf ein Öffnen des Kellerfensters verzichtet werden, um einen Wassereinbruch zu verhindern.

Das Gebäudeschutzsystem kann weitere Stellglieder 13 aufweisen. Als weitere Stellglieder 13 sind beispielsweise ein Heizungsthermostat, ein Entfeuchtungsgerät und ein Lüfter möglich.

Durch das Heizungsthermostat ist die Innentemperatur im Kellerraum regulierbar. Genauer gesagt ist es möglich, denn Taupunkt zu regulieren. Insbesondere kann der Taupunkt erhöht werden, um einer Kondensation vorzubeugen, wenn ein Lüften bzw. Entfeuchten der Raumluft auf Grund eines priorisierten Ereignisses nicht möglich ist.

Der Lüfter ermöglicht ein aktives Lüften des Kellerraums. Der Lüfter ist zur Anordnung in Räumen ohne Fenster vorteilhaft. Alternativ kann der Lüfter zusätzlich zu einem Fenster in einem Raum angeordnet werden. Durch Lüften ist die Innentemperatur und die Innenluftfeuchtigkeit des Kellerraums beeinflussbar. Der Lüfter ermöglicht ein Lüften des Raums, wenn ein Öffnen eines Fensters auf Grund eines Ereignisses nicht sinnvoll ist.

Durch das Entfeuchtungsgerät ist die Innenluftfeuchtigkeit regulierbar. Herrscht im Kellerraum eine hohe Luftfeuchtigkeit, kann das Entfeuchtungsgerät aktiviert werden, bis die Luftfeuchtigkeit einen gewünschten Wert aufweist. Insbesondere bei einem Ereignis, das ein aktives oder passives Lüften des Raums verhindert, ist ein Entfeuchtungsgerät vorteilhaft.

Der Schimmelsensor 18 dient, wie auch die Messungen der Temperatur und/oder der Luftfeuchtigkeit, dazu, frühzeitig klimatische Raumverhältnisse zu erkennen, die eine Schimmelbildung begünstigen. Dadurch kann das Gebäudeschutzsystem angepasst und eine Schimmelbildung vermieden werden.

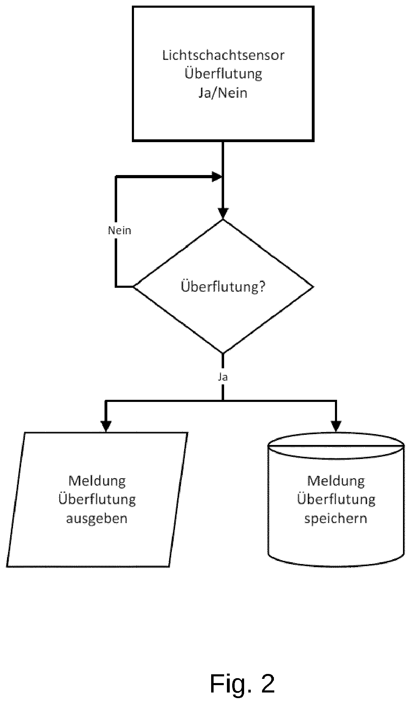

Die Figuren 2 bis 7 zeigen mögliche Abläufe für die Regelung des Gebäudeschutzsystems.

Figur 2 zeigt den Ablauf, bei der Abfrage des Lichtschachtsensors 16. Der Lichtschachtsensor 16 überprüft, ob eine Überflutung des Lichtschachts 15 vorliegt. Liegt keine Überflutung vor, wird die Abfrage wieder wiederholt. Liegt eine Überflutung vor, wird eine Meldung ausgegeben und gespeichert.

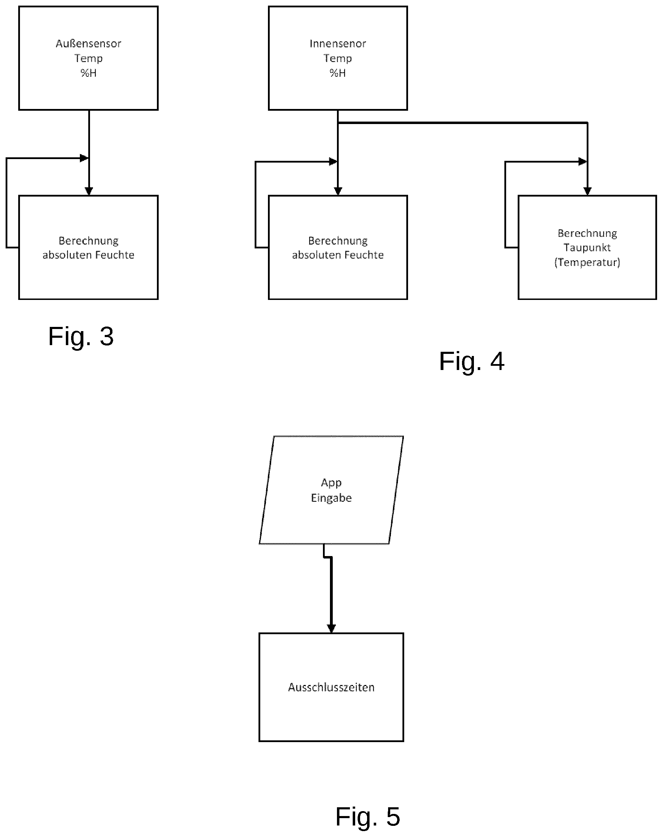

Fig. 3 und Fig. 4 zeigen, den Ablauf des Außenluftfeuchtigkeitssensors 11b und des Außentemperatursensors 12b sowie des Innenluftfeuchtigkeitssensors 11a und des Innentemperatursensors 12a.

Die Außensensoren 11b, 12b und die Innensensoren 11a, 12a messen die Temperatur und die relative Luftfeuchtigkeit im Freien. Aus diesen Werten wird die absolute Luftfeuchtigkeit berechnet. Mittels der von den Innensensoren 11a, 12a berechneten Werten wird zusätzlich der Taupunkt im Gebäudeinnern berechnet.

Fig. 5 zeigt, dass durch eine Eingabe in der App Ausschlusszeiten bestimmbar sind. Der Nutzer kann festlegen, zu welchen Zeiten die Regeleinheit ein Lüften veranlassen soll und wann nicht.

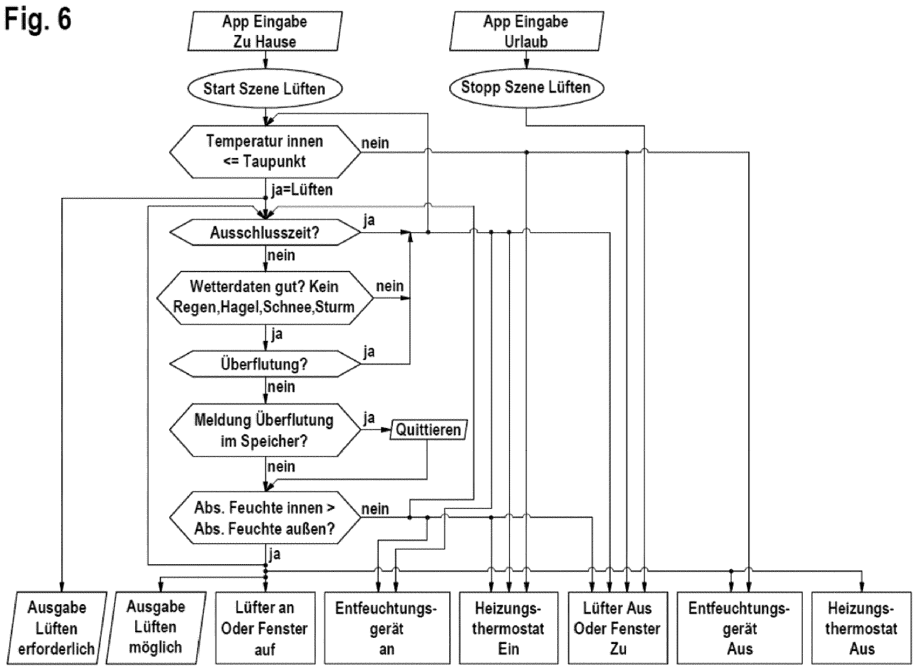

Fig. 6 ist die Gesamtdarstellung eines Ablaufs in Form eines Flussdiagramms für ein Ausführungsbeispiel eines Gebäudeschutzsystems, das durch eine App mit dem Nutzer verbunden ist. Das Gebäudeschutzsystem nach Fig. 6 umfasst den Modus "zu Hause" und den Modus "Urlaub". Die beiden Modi sind über die App einstellbar bzw. auswählbar. Es sind zusätzliche Modi möglich.

Wird in der App die Eingabe "Urlaub" getätigt, wird das Lüften der Szene bzw. des Gebäudeinneren gestoppt. Mit anderen Worten wird das Fenster 13 geschlossen und der Lüfter abgeschaltet, solange der Modus "Urlaub" aktiv ist. Dadurch ist das Gebäude gegen Einbruch gesichert.

Erfolgt die Eingabe "zu Hause" in der App, ist das Lüften aktiviert. Um zu überprüfen, ob ein Lüften notwendig ist, wird zunächst die Innentemperatur mit dem berechneten Taupunkt (vgl. Fig. 4) verglichen.

Ist die Innentemperatur höher als der Taupunkt, ist kein Lüften notwendig. Der Lüfter wird ausgeschaltet und/oder das Fenster 13 geschlossen. Das Entfeuchtungsgerät wird ebenfalls ausgeschaltet. Das Heizungsthermostat wird eingeschaltet.

Bei einer Innentemperatur, die kleiner als der Taupunkt oder gleich dem Taupunkt ist, ist ein Lüften notwendig, da sonst Wasser in der Luft und/oder an Oberflächen kondensiert. In dem Fall, dass ein Lüften notwendig ist, wird eine entsprechende Meldung, beispielsweise durch die App, ausgegeben.

Als nächstes wird überprüft, ob eine Ausschlusszeit vorliegt (vgl. Fig. 5). Ist das der Fall, wird der Lüfter ausgeschaltet und das Fenster 13 geschlossen. Um die Luftfeuchtigkeit zu regulieren, wird das Entfeuchtungsgerät und das Heizthermostat eingeschaltet. Anschließend wird erneut durch den Vergleich der Innentemperatur mit dem Taupunkt überprüft, ob ein Lüften notwendig ist. Dadurch wird eine Kondensation von Wasser vermieden.

Liegt keine Ausschlusszeit vor, wird überprüft, ob ein Ereignis vorliegt. Dazu werden zunächst die Wetterdaten 14 überprüft. Bei schlechten Wetterdaten, wie zum Beispiel bei Sturm, Regen, Schnee oder Hagel, liegt ein Ereignis vor. Bei einem Ereignis wird die Regelung angepasst. Genauer gesagt ist ein Lüften bei dem vorliegenden Ereignis nicht sinnvoll, da beispielsweise durch das geöffnete Fenster Wasser in das Gebäudeinnere gelangen kann. Der Lüfter wird ausgeschaltet und/oder das Fenster 13 geschlossen. Stattdessen wird zur Regelung der Innenluftfeuchtigkeit das Entfeuchtungsgerät und das Heizungsthermotat eingeschaltet. Während dieses Ereignis fortdauert, wird weiterhin die Innentemperatur mit dem Taupunkt verglichen.

Sind die Wetterdaten gut, wird als nächstes mögliches Ereignis überprüft, ob eine Überflutung, beispielsweise im Lichtschacht 15 (vgl. Fig. 2), vorliegt. Liegt eine Überflutung vor, wird von einem Lüften abgesehen, da sonst Wasser in das Gebäude eindringen würde. Der Lüfter wird ausgeschaltet und/oder das Fenster 13 geschlossen. Das Heizungsthermostat und das Entfeuchtungsgerät werden eingeschaltet. Im Falle einer Überflutung wir der Vergleich der Innentemperatur mit dem Taupunkt weiter fortgesetzt.

In einem alternativen Ausführungsbeispiel (nicht dargestellt) wird das Ereignis überprüft, ob im Gebäudeinnern eine Überflutung vorliegt. Bei einer Überflutung im Gebäudeinnern werden beispielsweise elektronische Geräte abgeschaltet und/oder eine Pumpe eingeschaltet.

In einem weiteren alternativen Ausführungsbeispiel (nicht dargestellt) ist die Regeleinheit beispielsweise dazu konfiguriert, die Betätigungszyklen des Kellerfensters zu zählen. Ab einer vordefinierten Anzahl an Öffnungs- bzw. Schließvorgängen tritt das Ereignis ein, dass eine Wartung des Kellerfensters notwendig ist. Bis die nötigen Wartungsmaßnahmen vollzogen wurden, also das Ereignis vorbei ist, bleibt das Kellerfenster geschlossen.

Liegt eine Überflutung im Lichtschacht 15 vor, wird wie in Fig. 2 beschrieben, eine Meldung ausgegeben und gespeichert. Als nächstes wird überprüft, ob eine solche Meldung im Speicher hinterlegt ist. Liegt eine solche Meldung vor, muss diese erst quittiert werden, bevor die Lüftung eingeschaltet und/oder das Kellerfenster geöffnet wird. Nach dem Ereignis einer Überflutung bedarf es somit einer manuellen Freigabe durch den Nutzer, bevor der Vorgang des Lüftens fortgesetzt werden kann.

Wenn keine Meldung vorliegt oder die Meldung aus dem Speicher quittiert wurde, folgt der Vergleich der absoluten Innenluftfeuchtigkeit mit der absoluten Außenluftfeuchtigkeit. Wenn die absolute Innenluftfeuchtigkeit größer als die absolute Außenluftfeuchtigkeit ist, kann der Wassergehalt in der Luft durch Lüften reduziert werden. Es erfolgt eine Ausgabe, dass ein Lüften möglich ist. Der Lüfter wird eingeschaltet und/oder das Fenster geöffnet. Das Entfeuchtungsgerät und das Heizungsthermostat werden ausgeschaltet.

Alternativ kann das Gebäudeschutzsystem weitere Sensoren und Aktoren umfassen, die dazu konfiguriert sind, Ereignisse zu erkennen und sinnvolle Maßnahmen zu ergreifen. Das Gebäudeschutzsystem, dessen Ablauf in Fig. 6 in Form eines Flussdiagramms dargestellt ist, kann beispielsweise einen Überschwemmungssensor 17 im Gebäudeinneren und eine Pumpe aufweisen, die bei einer Überschwemmung im Gebäudeinneren aktiviert wird. Das Gebäudeschutzsystem kann einen Rückstausensor aufweisen, der einen Rückstau erkennt und eine Rückstausicherung aktiviert. Das Gebäudeschutzsystem ist nicht auf die oben genannten Ereignisse beschränkt.

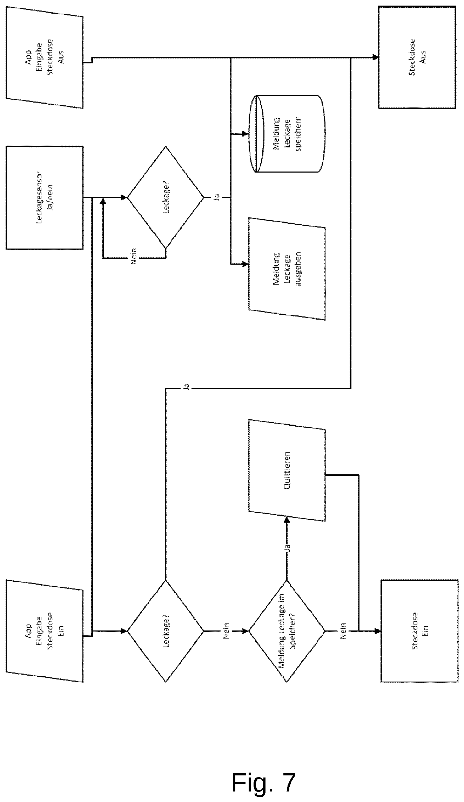

Fig. 7 zeigt einen beispielhaften Ablauf in Form eines Flussdiagramms, wenn das Ereignis einer Leckage, bzw. eines Rohrbruchs im Gebäude vorliegt.

In Fig. 7 ist die Regeleinheit 10 mit einem Leckagesensor signalverbunden. Die Leckage kann alternativ durch den Überschwemmungssensor 17 detektiert werden.

Über die App ist es möglich, die Steckdose ein- und auszuschalten. Wird in die App die Eingabe getätigt, dass die Steckdose ausgeschaltet werden soll, erfolgt kein weiterer Schritt und die Steckdose wird ausgeschaltet.

Wird in der App die Eingabe getätigt, dass die Steckdose eingeschaltet werden soll bzw. wenn die Steckdose eingeschaltet ist, wird überprüft, ob eine Leckage vorliegt. Liegt eine Leckage vor, wird die Steckdose ausgeschaltet. Gleichzeitig wird eine Meldung, beispielsweise in der App oder durch einen Alarm ausgegeben und gespeichert.

Wird die Steckdose erneut eingeschaltet und es liegt keine Leckage vor, überprüft die Regeleinheit, ob eine Meldung einer Leckage gespeichert ist. Liegt eine solche Meldung vor, muss diese quittiert werden. Mit anderen Worten muss nach einer Leckage der Nutzer der App die Steckdose manuell freigeben. So wird sichergestellt, dass die Leckage behoben ist. Nach dem Quittieren wird die Steckdose eingeschaltet. Liegt keine Meldung im Speicher vor, ist keine manuelle Freigabe notwendig und die Steckdose wird eingeschaltet.

Der oben beschriebene Ablauf ist besonders vorteilhaft, wenn beispielsweise eine Waschmaschine an der oben genannten Steckdose angeschlossen ist. Es ist möglich, andere elektronische Geräte auf diese Art und Weise zu überwachen. Das Flussdiagramm gemäß Fig. 7 ist mit dem Flussdiagramm gemäß Fig. 6 kombinierbar.

### Bezugszeichenliste

- 10: Regeleinheit
- 11a: Innenluftfeuchtigkeitssensor
- 11b: Außenluftfeuchtigkeitssensor
- 12a: Innentemperatursensor
- 12b: Außentemperatursensor
- 13: Stellglied
- 14: Wetterdaten
- 15: Lichtschacht
- 16: Lichtschachtsensor
- 17: Überschwemmungssensor
- 18: Schimmelsensor
- 19: Hochwassersensor

## Patentansprüche

1. Gebäudeschutzsystem, insbesondere Kellerschutzsystem, zum Schutz vor Gebäudeschäden, insbesondere Nässe und/oder Feuchtigkeit und/oder Schlamm und/oder Überschwemmung, das wenigstens eine Regeleinheit (10) zur Regelung der Luftfeuchtigkeit und/oder der Temperatur aufweist, wobei
die Regeleinheit (10) derart konfiguriert ist, dass die Regelung der Luftfeuchtigkeit und/oder der Temperatur durch Ereignisse geändert und/oder angepasst wird, die zusätzliches Eintragen von Nässe und/oder von Feuchtigkeit in das Gebäude, insbesondere in einen Kellerraum, verursachen, wobei die Änderung der Regelung durch die Ereignisse gegenüber der Regelung der Luftfeuchtigkeit und/oder der Temperatur priorisiert ist, wobei die Regeleinheit (10) dazu konfiguriert ist, abhängig von einem priorisierten Ereignis Schutzmaßnahmen zu ergreifen, wobei die Regeleinheit (10) von einem Normalbetrieb abweicht;
wobei die Regeleinheit (10) mit wenigstens einem Stellglied (13) zum Regeln der Luftfeuchtigkeit und/oder der Temperatur signalverbunden ist, wobei das Stellglied (13) einen Lüfter zum aktiven Lüften und/oder ein Fenster zum passiven Lüften und/oder ein Entfeuchtungsgerät aufweist, wobei das Stellglied ein Heizthermostat aufweist, wobei das Heizthermostat ausgelegt ist, die Innentemperatur im Gebäude zu regulieren, insbesondere zu erhöhen, um der Kondensation von Feuchtigkeit vorzubeugen, wenn ein Lüften oder Entfeuchten der Raumluft auf Grund des priorisierten Ereignisses nicht möglich ist, wobei die Regeleinheit (10) dazu konfiguriert ist, dass nach dem priorisierten Ereignis eine manuelle Freigabe erforderlich ist, um wieder in den Normalbetrieb zurück zu kehren, **dadurch gekennzeichnet, dass** die Regeleinheit (10) dazu konfiguriert ist, eine Laufzeit und/oder eine Betätigungsanzahl und/oder einen Füllstand wenigstens eines Stellglieds (13) zu überwachen und bei Erreichen und/oder Überschreiten eines vordefinierten Grenzwerts der Laufzeit und/oder der Betätigungsanzahl und/oder des Füllstands ein Signal und/oder eine Meldung auszugeben.

2. Gebäudeschutzsystem nach Anspruch 1,
**dadurch gekennzeichnet, dass**
die Regeleinheit (10) mit Sensoren für die Erfassung der Innen- und Außentemperatur (12a, 12b) und/oder Sensoren für die Erfassung der Innen- und Außenluftfeuchtigkeit (11a, 11b) signalverbunden ist.

3. Gebäudeschutzsystem nach Anspruch 1 oder 2,
**dadurch gekennzeichnet, dass**
die Regeleinheit (10) dazu konfiguriert ist, Ereignisse zu priorisieren, die Wetterdaten (14) und/oder lokale hydrologische Parameter, umfassen, wobei die Daten und/oder die Parameter lokal oder extern abrufbar sind, wobei die Regeleinheit (10) insbesondere dazu konfiguriert ist, bei potentiell schädlichen Wetterdaten (14) und/oder hydrologischen Parametern, beispielsweise bei Sturm und/oder Hochwasser, die Regelung der Luftfeuchtigkeit und/oder der Temperatur zu ändern und/oder anzupassen, insbesondere den Lüfter auszuschalten und/oder das Fenster (13) zu schließen und/oder geschlossen zu halten und/oder das Entfeuchtungsgerät und/ oder den Heizungsthermostat einzuschalten.

4. Gebäudeschutzsystem nach Anspruch 3,
**dadurch gekennzeichnet, dass**
das Fenster (13) einen Lichtschacht (15) mit einem Lichtschachtsensor (16) zur Erfassung eines Wasserstands, insbesondere einer Überflutung, im Lichtschacht aufweist.

5. Gebäudeschutzsystem nach Anspruch 4,
**dadurch gekennzeichnet, dass**
die Regeleinheit (10) dazu konfiguriert ist, ein Ereignis zu priorisieren, das einen Wasserstand im Lichtschacht (15), insbesondere eine Überflutung des Lichtschachts (15), aufweist, wobei die Regeleinheit (10) insbesondere dazu konfiguriert ist, bei einem Wasserstand, insbesondere einer Überflutung, im Lichtschacht (15) die Regelung der Luftfeuchtigkeit und/oder der Temperatur zu ändern und/oder anzupassen, insbesondere den Lüfter auszuschalten und/oder das Fenster (13) zu schließen und/oder geschlossen zu halten und/oder das Entfeuchtungsgerät und/oder den Heizungsthermostat einzuschalten.

6. Gebäudeschutzsystem nach einem der vorhergehenden Ansprüche,
**dadurch gekennzeichnet, dass**
im Gebäude ein Sensor zur Erfassung eines Wasserstands (17), insbesondere einer Überschwemmung, angeordnet ist.

7. Gebäudeschutzsystem nach Anspruch 6,
**dadurch gekennzeichnet, dass**
die Regeleinheit (10) dazu konfiguriert ist, ein Ereignis zu priorisieren, das den Wasserstand im Gebäude, insbesondere eine Überschwemmung, umfasst, wobei die Regeleinheit (10) insbesondere dazu konfiguriert ist, bei einem Wasserstand im Gebäude, insbesondere bei einer Überschwemmung, eine Pumpe zu aktivieren und/oder elektronische Geräte abzuschalten.

8. Gebäudeschutzsystem nach einem der vorhergehenden Ansprüche,
**dadurch gekennzeichnet, dass**
die Regeleinheit (10) mittels einer App verbindbar und einstellbar ist, und wenigstens einen Lüften- und einen Urlaubsmodus umfasst, wobei die Regeleinheit (10) insbesondere mit einem Mobilfunkgerät verbunden und dazu konfiguriert ist, in Abhängigkeit vom Abstand des Mobilfunkgeräts zur Regeleinheit (10) den Modus zu wechseln.

9. Verfahren zum Betrieb eines Gebäudeschutzsystems, insbesondere eines Kellerschutzsystems, nach einem der vorhergehenden Ansprüche, bei dem
a. die Ereignisse, bei denen die Regelung der Luftfeuchtigkeit und/ oder der Temperatur geändert und/oder angepasst wird, festgelegt werden,
b. die Regeleinheit (10) im Betrieb kontinuierlich überprüft, ob eines der festgelegten Ereignisse vorliegt,
c. beim Vorliegen eines Ereignisses die Regelung der Luftfeuchtigkeit und/oder der Temperatur in Abhängigkeit des vorliegenden Ereignisses geändert und/oder angepasst wird,
d. die Regeleinheit (10) abhängig von einem zu priorisierenden Ereignis Schutzmaßnahmen zur Regelung der Luftfeuchtigkeit und/oder der Temperatur ergreift, wobei die Regeleinheit (10) von einem Normalbetrieb abweicht,
wobei die Regeleinheit (10) mit wenigstens einem Stellglied (13) zum Regeln der Luftfeuchtigkeit und/oder der Temperatur signalverbunden ist, wobei das Stellglied ein Heizthermostat aufweist, wobei die Innentemperatur im Gebäude durch das Heizthermostat reguliert, insbesondere erhöht, wird, um der Kondensation von Feuchtigkeit vorzubeugen, wenn ein Lüften oder Entfeuchten der Raumluft auf Grund des priorisierten Ereignisses nicht möglich ist, wobei die Regeleinheit (10) nach dem priorisierten Ereignis durch eine manuelle Freigabe wieder in den Normalbetrieb zurückkehrt, **dadurch gekennzeichnet, dass** die Regeleinheit (10), eine Laufzeit und/ oder eine Betätigungsanzahl und/oder einen Füllstand wenigstens eines Stellglieds (13) überwacht und bei Erreichen und/oder Überschreiten eines vordefinierten Grenzwerts der Laufzeit und/oder der Betätigungsanzahl und/oder des Füllstands ein Signal und/oder eine Meldung ausgibt.

10. Verfahren nach Anspruch 9,
**dadurch gekennzeichnet, dass**
die Regeleinheit (10) ein Ereignis prüft, bei dem Wetterdaten (14) und/ oder lokale hydrologische Parameter, abgefragt werden, die lokal ermittelt oder extern bezogen werden.

11. Verfahren nach Anspruch 9 oder 10,
**dadurch gekennzeichnet, dass**
die Regeleinheit (10) ein Ereignis prüft, bei dem der Status des Wasserstands in einem Lichtschacht (15) erfasst wird und/oder die Regeleinheit (10) ein Ereignis prüft, bei dem der Wasserstand im Gebäude erfasst wird.

## Claims

1. Building protection system, in particular basement protection system, for protection against damage to buildings, in particular wetness and/or moisture and/or mud and/or flooding, which has at least one regulating unit (10) for regulating the air humidity and/or temperature,
wherein
the regulating unit (10) is configured such that the regulation of the air humidity and/or the temperature is changed and/or adapted by events which cause additional ingress of wetness and/or moisture into the building, in particular into a basement room,
wherein the change in the regulation by the events is prioritized with respect to the regulation of the air humidity and/or the temperature, wherein the regulating unit (10) is configured to take protective measures depending on a prioritized event, wherein the regulating unit (10) deviates from normal operation;
wherein the regulating unit (10) is signal-connected to at least one actuator (13) for regulating the air humidity and/or the temperature, wherein the actuator (13) comprises a fan for active ventilation and/or a window for passive ventilation and/or a dehumidification device, wherein the actuator comprises a heating thermostat, wherein the heating thermostat is adapted to regulate, in particular to increase, the indoor temperature in the building to prevent condensation of moisture when ventilation or dehumidification of the indoor air is not possible due to the prioritized event, wherein the regulating unit (10) is configured so that a manual release is required after the prioritized event in order to return to normal operation,
**characterized in that**
the regulating unit (10) is configured to monitor a running time and/or a number of actuations and/or a fill level of at least one actuator (13) and to output a signal and/or a message when a predefined limit value of the running time and/or the number of actuations and/or the fill level is reached and/or exceeded.

2. Building protection system according to claim 1,
**characterized in that**
the regulating unit (10) is signal-connected to sensors for detecting the indoor and outdoor temperature (12a, 12b) and/or sensors for detecting the indoor and outdoor air humidity (11a, 11b).

3. Building protection system according to claim 1 or 2,
**characterized in that**
the regulating unit (10) is configured to prioritize events comprising weather data (14) and/or local hydrological parameters, wherein the data and/or the parameters are retrievable locally or externally, wherein the regulating unit (10) is configured in particular, in the event of potentially harmful weather data (14) and/or hydrological parameters, for example in the event of storms and/or flooding, to change and/or adjust the regulation of the air humidity and/or temperature, in particular to switch off the fan and/or to close and/or keep closed the window (13) and/or to switch on the dehumidifier and/or the heating thermostat.

4. Building protection system according to claim 3,
**characterized in that**
the window (13) has a light well (15) with a light well sensor (16) for detecting a water level, in particular flooding, in the light well.

5. Building protection system according to claim 4,
**characterized in that**
the regulating unit (10) is configured to prioritize an event which has a water level in the light well (15), in particular flooding of the light well (15), wherein the regulating unit (10) is configured in particular, at a water level, in particular flooding, in the light well (15), to change and/or adjust the regulation of the air humidity and/or the temperature, in particular to switch off the fan and/or to close and/or keep closed the window (13) and/or to switch on the dehumidifier and/or the heating thermostat.

6. Building protection system according to one of the preceding claims, **characterized in that**
a sensor for detecting a water level (17), in particular flooding, is arranged in the building.

7. Building protection system according to claim 6,
**characterized in that**
the regulating unit (10) is configured to prioritize an event comprising the water level in the building, in particular a flooding, wherein the regulating unit (10) is configured in particular to activate a pump and/or switch off electronic devices in the event of a water level in the building, in particular a flood.

8. Building protection system according to one of the preceding claims, **characterized in that**
the regulating unit (10) can be connected and adjusted by means of an app and comprises at least one ventilation mode and one vacation mode, wherein the regulating unit (10) is connected in particular to a mobile radio device and is configured to change the mode depending on the distance of the mobile radio device from the regulating unit (10).

9. Method for operating a building protection system, in particular a basement protection system, according to one of the preceding claims, in which
a. the events at which the regulation of the humidity and/or the temperature is changed and/or adjusted are determined,
b. the regulating unit (10) continuously checks during operation whether one of the defined events is present,
c. if an event occurs, the regulation of the air humidity and/or temperature is changed and/or adapted depending on the event present,
d. the regulating unit (10) takes protective measures to regulate the air humidity and/or the temperature depending on an event to be prioritized, wherein the regulating unit (10) deviates from normal operation,
wherein the regulating unit (10) is signal-connected to at least one actuator (13) for regulating the air humidity and/or the temperature, wherein the actuator has a heating thermostat, wherein the indoor temperature in the building is regulated, in particular increased, by the heating thermostat in order to prevent condensation of moisture if ventilation or dehumidification of the indoor air is not possible due to the prioritized event, wherein the regulating unit (10) returns to normal operation after the prioritized event by a manual release,
**characterized in that**
the regulating unit (10) monitors a running time and/or a number of actuations and/or a fill level of at least one actuator (13) and outputs a signal and/or a message when a predefined limit value of the running time and/or the number of actuations and/or the fill level is reached and/or exceeded.

10. Method according to claim 9,
**characterized in that**
the regulating unit (10) checks an event in which weather data (14) and/or local hydrological parameters, which are determined locally or obtained externally, are queried.

11. Method according to claim 9 or 10,
**characterized in that**
the regulating unit (10) checks an event in which the status of the water level in a light well (15) is detected and/or the regulating unit (10) checks an event in which the water level in the building is detected.

## Revendications

1. Système de protection du bâtiment, en particulier système de protection des caves, pour la protection contre les dommages causés aux bâtiments, en particulier l'eau et/ou l'humidité et/ou la boue et/ou les inondations, qui présente au moins une unité de régulation (10) pour réguler l'humidité de l'air et/ou la température,
l'unité de régulation (10) étant configurée de manière à ce que la régulation de l'humidité de l'air et/ou de la température soit modifiée et/ou adaptée par des événements qui provoquent un apport supplémentaire d'eau et/ou d'humidité dans le bâtiment, en particulier dans une cave, la modification de la régulation par les événements étant prioritaire par rapport à la régulation de l'humidité de l'air et/ou de la température, l'unité de régulation (10) étant configurée pour prendre des mesures de protection en fonction d'un événement prioritaire, l'unité de régulation (10) dérogeant à un fonctionnement normal ;
l'unité de régulation (10) étant reliée par signal à au moins un organe de réglage (13) pour la régulation de l'humidité de l'air et/ou de la température, l'organe de réglage (13) présentant un ventilateur pour l'aération active et/ou une fenêtre pour l'aération passive et/ou un appareil de déshumidification, l'organe de réglage présentant un thermostat de chauffage, le thermostat de chauffage étant adapté pour réguler, en particulier pour augmenter, la température intérieure dans le bâtiment, pour prévenir la condensation de l'humidité, lorsqu'il n'est pas possible d'aérer ou de déshumidifier l'air ambiant en raison de l'événement prioritaire, l'unité de régulation (10) étant configurée pour exiger, après l'événement prioritaire, une libération manuelle pour revenir à un fonctionnement normal, **caractérisée en ce que** l'unité de régulation (10) est configurée pour surveiller un temps de fonctionnement et/ou un nombre d'actionnements et/ou un niveau de remplissage d'au moins un organe de réglage (13) et pour émettre un signal et/ou un message lorsqu'une valeur limite prédéfinie du temps de fonctionnement et/ou du nombre d'actionnements et/ou du niveau de remplissage est atteinte et/ou dépassée.

2. Système de protection du bâtiment selon la revendication 1,
**caractérisé en ce que**
l'unité de régulation (10) est reliée par signal à des capteurs pour la détection de la température intérieure et extérieure (12a, 12b) et/ou à des capteurs pour la détection de l'humidité de l'air intérieure et extérieure (11a, 11b).

3. Système de protection du bâtiment selon la revendication 1 ou 2,
**caractérisé en ce que**
l'unité de régulation (10) est configurée pour prioriser des événements comprenant des données météorologiques (14) et/ou des paramètres hydrologiques locaux, les données et/ou les paramètres étant consultables localement ou à l'extérieur, l'unité de régulation (10) étant configurée en particulier pour modifier et/ou adapter la régulation de l'humidité de l'air et/ou de la température en cas de données météorologiques (14) et/ou de paramètres hydrologiques potentiellement nuisibles, par exemple en cas de tempête et/ou d'inondation, en particulier pour éteindre le ventilateur et/ou fermer et/ou maintenir fermée la fenêtre (13) et/ou mettre en marche l'appareil de déshumidification et/ou le thermostat de chauffage.

4. Système de protection du bâtiment selon la revendication 3,
**caractérisé en ce que**
la fenêtre (13) présente un soupirail (15) avec un capteur de soupirail (16) pour détecter un niveau d'eau, en particulier une inondation, dans le soupirail.

5. Système de protection du bâtiment selon la revendication 4,
**caractérisé en ce que**
l'unité de régulation (10) est configurée pour prioriser un événement qui présente un niveau d'eau dans le soupirail (15), en particulier une inondation du soupirail (15), l'unité de régulation (10) étant en particulier configurée pour, en cas de niveau d'eau, en particulier d'inondation, dans le soupirail (15), modifier et/ou adapter la régulation de l'humidité de l'air et/ou de la température, en particulier pour éteindre le ventilateur et/ou fermer et/ou maintenir fermée la fenêtre (13) et/ou mettre en marche l'appareil de déshumidification et/ou le thermostat de chauffage.

6. Système de protection du bâtiment selon l'une des revendications précédentes,
**caractérisé en ce que**
dans le bâtiment, un capteur est disposé pour détecter un niveau d'eau (17), en particulier une inondation.

7. Système de protection du bâtiment selon la revendication 6,
**caractérisé en ce que**
l'unité de régulation (10) est configurée pour prioriser un événement qui comprend le niveau d'eau dans le bâtiment, en particulier une inondation, l'unité de régulation (10) étant configurée en particulier pour activer une pompe et/ou éteindre des appareils électroniques en cas de niveau d'eau dans le bâtiment, en particulier en cas d'inondation.

8. Système de protection du bâtiment selon l'une des revendications précédentes,
**caractérisé en ce que**
l'unité de régulation (10) est reliable et réglable au moyen d'une application et comprend au moins un mode de ventilation et un mode de vacances, l'unité de régulation (10) étant en particulier reliée à un appareil de téléphonie mobile et étant configurée pour changer de mode en fonction de la distance de l'appareil de téléphonie mobile par rapport à l'unité de régulation (10).

9. Procédé de fonctionnement d'un système de protection du bâtiment, en particulier d'un système de protection des caves, selon l'une des revendications précédentes, dans lequel
a. les événements au cours desquels la régulation de l'humidité de l'air et/ou de la température est modifiée et/ou adaptée soient déterminés,
b. l'unité de régulation (10) vérifie en permanence, pendant le fonctionnement, si l'un des événements déterminés s'est produit,
c. en cas d'événement, la régulation de l'humidité de l'air et/ou de la température est modifiée et/ou adaptée en fonction de l'événement en question,
d. l'unité de régulation (10) prend des mesures de protection pour réguler l'humidité de l'air et/ou la température en fonction d'un événement à prioriser, l'unité de régulation (10) s'écartant d'un fonctionnement normal,
l'unité de régulation (10) étant reliée par signal à au moins un organe de réglage (13) pour la régulation de l'humidité de l'air et/ou de la température, l'organe de réglage présentant un thermostat de chauffage, la température intérieure dans le bâtiment étant régulée, en particulier augmentée, par le thermostat de chauffage, pour prévenir la condensation de l'humidité, lorsqu'il n'est pas possible d'aérer ou de déshumidifier l'air ambiant en raison de l'événement prioritaire, l'unité de régulation (10) revenant au fonctionnement normal après l'événement prioritaire par une libération manuelle, **caractérisé en ce que** l'unité de régulation (10) surveille un temps de fonctionnement et/ou un nombre d'actionnements et/ou un niveau de remplissage d'au moins un organe de réglage (13) et émet un signal et/ou un message lorsqu'une valeur limite prédéfinie du temps de fonctionnement et/ou du nombre d'actionnements et/ou du niveau de remplissage est atteinte et/ou dépassée.

10. Procédé selon la revendication 9,
**caractérisé en ce que**
l'unité de régulation (10) vérifie un événement au cours duquel des données météorologiques (14) et/ou des paramètres hydrologiques locaux sont interrogés, lesquels sont déterminés localement ou obtenus de manière externe.

11. Procédé selon la revendication 9 ou 10,
**caractérisé en ce que**
l'unité de régulation (10) vérifie un événement au cours duquel l'état du niveau d'eau dans un soupirail (15) est détecté et/ou l'unité de régulation (10) vérifie un événement au cours duquel le niveau d'eau dans le bâtiment est détecté.
